# EUROPÄISCHE PATENTANMELDUNG

(11) **EP 4 180 439 A1**
(43) Veröffentlichungstag der Anmeldung: **17.05.2023**
(21) Anmeldenummer: 21208233.3
(22) Anmeldetag: 15.11.2021
(51) Int. Cl.: C07F 9/6574

(54) **VERFAHREN ZUR REDUZIERUNG DES CHLORGEHALTS VON ORGANOBISPHOSPHITEN MITTELS SCHUTZGASFRITTE**

(71) Anmelder: Evonik Operations GmbH, 45128 Essen (DE)
(72) Erfinder: SALE, Anna Chiara, 45657 Recklinghausen (DE); FRANKE, Robert, 45772 Marl (DE); BRÄCHER, Alexander, 45721 Haltern am See (DE); FRIDAG, Dirk, 45721 Haltern am See (DE); KNOSSALLA, Johannes, 46514 Gahlen (DE); KUCMIERCZYK, Peter, 44628 Herne (DE); MARKOVIC, Ana, 45721 Haltern am See (DE)
(74) Vertreter: Evonik Patent Association

(57) **Zusammenfassung**

Verfahren zur Reduzierung des Chlorgehalts von Organobisphosphiten mittels Schutzgasfritte.

## Beschreibung

Die Erfindung betrifft ein Verfahren zur Reduzierung des Chlorgehalts von Organobisphosphiten mittels Schutzgasfritte.

Ein Anwendungsgebiet der Organophosphorverbindungen ist die Katalyse: So werden insbesondere Phosphine, Phosphite und Phosphoramidite als Liganden in Katalysatorkomplexen verwendet, die wiederum zur homogenen Katalyse von großindustriell betriebenen Prozessen verwendet werden. Dabei ist insbesondere die Hydroformylierung von ungesättigten Verbindungen mit Kohlenmonoxid und Wasserstoff zu nennen, die in der Regel in Gegenwart eines homogenen Katalysatorsystems erfolgt, welches ein Metall sowie mindestens eine Organophosphorverbindung als Ligand aufweist.

Bei der Synthese dieser Liganden werden häufig chlorhaltige Reagenzien verwendet. So wird bei der Synthese von Phosphitliganden meist Phosphortrichlorid (PCl₃) eingesetzt. Die bei der Herstellung von Organophosphorverbindungen eingesetzten Chlorverbindungen bereiten bei der bestimmungsgemäßen Verwendung bzw. Weiterverarbeitung der Organophosphorverbindung Schwierigkeiten: So wird die gewünschte Organophosphorverbindung niemals sofort rein, sondern stets verunreinigt erhalten. Einen Teil der Verunreinigungen stellen Chlorverbindungen dar.

Es hat sich gezeigt, dass der Chlorgehalt der Organophosphorverbindung auch dann noch unerwünscht hoch ist, wenn das Rohprodukt bei der Synthese am Ende säulenchromatografisch aufgereinigt wird.

Ein geeignetes Verfahren zur Bestimmung des Chlorgehalts ist die Verbrennung nach Wickbold mit Probenvorbereitung nach DIN 51408 und Messung per lonenchromatographie nach DIN EN ISO 10304.

In WO 2012/095255 A1 wird ein Verfahren zur Aufreinigung von 6,6'-[(3,3'-Di-tert-butyl-5,5'-dimethoxy-1,1'-biphenyl-2,2'diyl)bis(oxy)]bis(dibenzo[d,f][1,3,2]dioxaphosphepin) (= "Biphephos") (**1**) beschrieben.

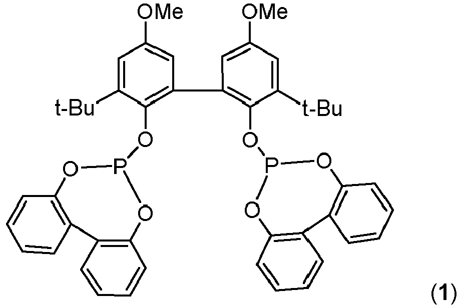

Das Aufreinigen erfolgt hierbei durch Umkristallisation. In Beispiel 6 werden 100 g Biphephos in Ethylacetat suspendiert, zum Sieden erhitzt, mit 2 g Kieselgur versetzte und heiß über eine G3 Glasfritte filtriert. Anschließend wurde die Mutterlauge auf Zimmertemperatur abkühlen, wobei Biphephos (**1**) ausfiel. Dieses wurde über eine weitere G3 Glasfritte abfiltriert und mit Ethylacetat nachgewaschen. Das erhaltene Biphephos wies danach einen Chlorgehalt von <100 ppm auf.

Die in WO 2012/095255 A1 beschriebenen Aufreinigungsverfahren sind jedoch recht zeitaufwendig.

Aufgabe der vorliegenden Erfindung war es, ein Aufreinigungsverfahren für Organobisphosphite bereitzustellen, bei dem der Chlorgehalt schneller, also mit weniger Zeitaufwand, reduziert werden kann.

Gelöst wird diese Aufgabe durch ein Verfahren gemäß Anspruch 1.

Verfahren zur Reduktion des Chlorgehalts in einem Organobisphosphit einer der allgemeinen Formeln **I** , **II** oder **III**: 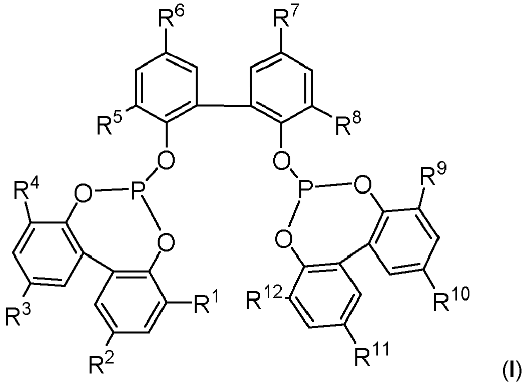 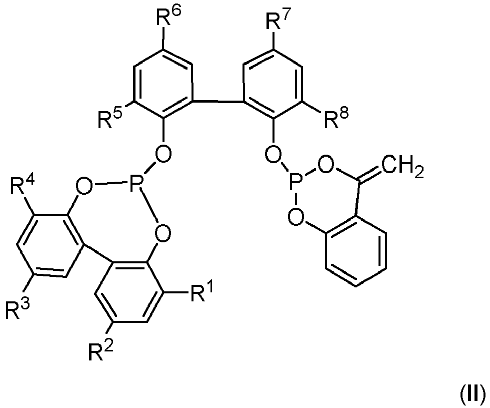 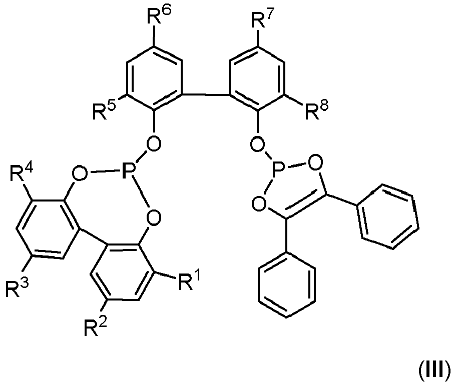 wobei
R¹, R², R³, R⁴, R⁵, R⁶, R⁷, R⁸, R⁹, R¹⁰, R¹¹, R¹² jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, Halogen, -NO₂;
umfassend die Verfahrensschritte:
a) säulenchromatografisch Aufreinigung des Rohproduktes aus der Synthes des Organobisphosphits;
b) auflösen des in a) erhaltenen Organobisphosphits in einem ersten Lösungsmittel oder erstem Lösungsmittelgemisch, so dass eine Lösung vorliegt;
c) filtrieren der Lösung aus b) unter Schutzgas mit einer Schutzgasfritte, welche mit Silikagel gefüllt ist, unter Zugabe eines Laufmittels, wobei auf die jeweilige Masse bezogen mehr Silikagel verwendet wird als Organobisphosphit in Verfahrensschritt b) gelöst wurde.

Bei der Masse an Silikagel handelt es sich um die Trocken-Masse des in die Schutzgasfritte eingefüllten Silikagels.

Überraschenderweise wurde gefunden, dass die schnelle Filtration mit einer Schutzgasfritte zu einer deutlichen Reduktion des Chlorgehaltes im Organobisphosphits führt, obwohl das Rohprodukt am Ende der Synthese bereits säulenchromatografisch aufgereinigt wurde.

Im Rahmen der Erfindung umfasst der Ausdruck -(C₁-C₁₂)-Alkyl geradkettige und verzweigte Alkylgruppen. Vorzugsweise handelt es sich dabei um unsubstituierte geradkettige oder verzweigte -(C₁-C₈)-Alkyl- und ganz bevorzugt -(C₁-C₆)-Alkylgruppen. Beispiele für -(C₁-C₁₂)-Alkylgruppen sind insbesondere Methyl, Ethyl, Propyl, Isopropyl, n-Butyl, iso-Butyl, sec.-Butyl, tert.-Butyl, n-Pentyl, 2-Pentyl, 2-Methylbutyl-, 3-Methylbutyl-, 1,2-Dimethylpropyl-, 1,1-Dimethylpropyl, 2,2-Dimethylpropyl-, 1-Ethylpropyl-, n-Hexyl-, 2-Hexyl-, 2-Methylpentyl-, 3-Methylpentyl-, 4-Methylpentyl-, 1,1-Dimethylbutyl-, 1,2-Dimethylbutyl-, 2,2-Dimethylbutyl-, 1,3-Dimethylbutyl-, 2,3-Dimethylbutyl-, 3,3-Dimethylbutyl-, 1,1,2-Trimethylpropyl-, 1,2,2-Trimethylpropyl-, 1-Ethylbutyl-, 1-Ethyl-2-methylpropyl-, n-Heptyl-, 2-Heptyl-, 3-Heptyl-, 2-Ethylpentyl-, 1-Propylbutyl-, n-Octyl-, 2-Ethylhexyl-, 2-Propylheptyl-, Nonyl-, Decyl.

Der Ausdruck -(C₆-C₂₀)-Aryl umfasst im Sinne der vorliegenden Erfindung mono- oder polycyclische aromatische Kohlenwasserstoffreste. Diese weisen 6 bis 20 Ringatome, besonders bevorzugt 6 bis 14 Ringatome, insbesondere 6 bis 10 Ringatome, auf. Aryl steht vorzugsweise für -(C₆-C₁₀)-Aryl. Aryl steht insbesondere für Phenyl, Naphthyl, Indenyl, Fluorenyl, Anthracenyl, Phenanthrenyl, Naphthacenyl, Chrysenyl, Pyrenyl, Coronenyl. Insbesondere steht Aryl für Phenyl, Naphthyl und Antracenyl.

In einer Variante des Verfahrens umfasst dieses die zusätzlichen Verfahrensschritte b') und b") umfasst:
b') aufschlemmen von Silikagel mit einem zweiten Lösungsmittel oder zweitem Lösungsmittelgemisch, so dass eine Schlemme vorliegt;
b") einfüllen der Schlemme in eine Schutzgasfritte.

In einer Variante des Verfahrens weist das Silikagel folgende Spezifikation auf:
Kieselgel 60, 0,04 - 0,063 mm.

In einer Variante des Verfahrens handelt es sich bei dem Schutzgas um Argon.

In einer Variante des Verfahrens wird in Verfahrensschritt b) ein erstes Lösungsmittel verwendet.

In einer Variante des Verfahrens ist das erste Lösungsmittel ausgewählt aus: Ethylacetat, Anisol, ortho-Xylol, Toluol, Aceton, Methanol, Ethanol, Propanol, iso-Propanol, Acetonitril.

In einer Variante des Verfahrens ist das erste Lösungsmittel Toluol.

In einer Variante des Verfahrens wird in Verfahrensschritt a) ein erstes Lösungsmittelgemisch verwendet.

In einer Variante des Verfahrens umfasst das erste Lösungsmittelgemisch mindestens zwei Lösungsmittel ausgewählt aus: Ethylacetat, Anisol, ortho-Xylol, Toluol, Aceton, Methanol, Ethanol, Propanol, iso-Propanol, Acetonitril.

In einer Variante des Verfahrens wird in Verfahrensschritt b') ein zweites Lösungsmittel verwendet.

In einer Variante des Verfahrens ist das zweite Lösungsmittel ausgewählt aus: Ethylacetat, Anisol, ortho-Xylol, Toluol, Aceton, Methanol, Ethanol, Propanol, iso-Propanol, Acetonitril.

In einer Variante des Verfahrens ist das zweite Lösungsmittel Toluol.

In einer Variante des Verfahrens wird in Verfahrensschritt b') ein zweites Lösungsmittelgemisch verwendet.

In einer Variante des Verfahrens umfasst das zweite Lösungsmittelgemisch mindestens zwei Lösungsmittel ausgewählt aus: Ethylacetat, Anisol, ortho-Xylol, Toluol, Aceton, Methanol, Ethanol, Propanol, iso-Propanol, Acetonitril.

In einer Variante des Verfahrens ist das Laufmittel ausgewählt aus:
Ethylacetat, Anisol, ortho-Xylol, Toluol, Aceton, Methanol, Ethanol, Propanol, iso-Propanol, Acetonitril oder Mischungen daraus.

In einer Variante des Verfahrens ist das Laufmittel Toluol.

In einer Variante des Verfahrens sind R¹, R², R³, R⁴, R⁵, R⁶, R⁷, R⁸, R⁹, R¹⁰, R¹¹, R¹² jeweils unabhängig voneinander ausgewählt aus: -H, -(C₁-C₁₂)-Alkyl, -O-(C₁-C₁₂)-Alkyl.

In einer Variante des Verfahrens weist das Organobisphosphit die Struktur (**1**) auf:

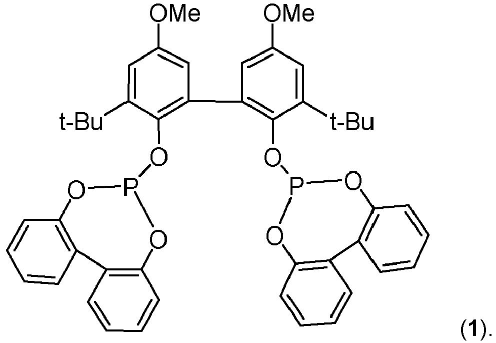

In einer Variante des Verfahrens weist das Organobisphosphit die Struktur (**2**) auf:

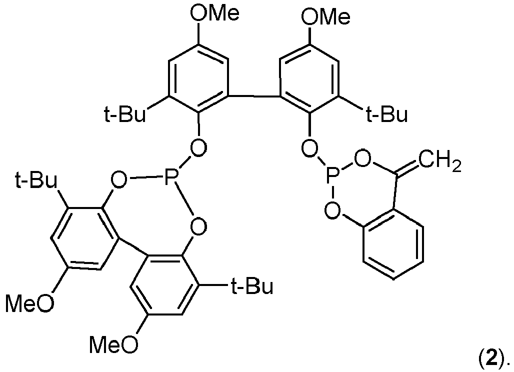

In einer Variante des Verfahrens weist das Organobisphosphit die Struktur (**3**) auf:

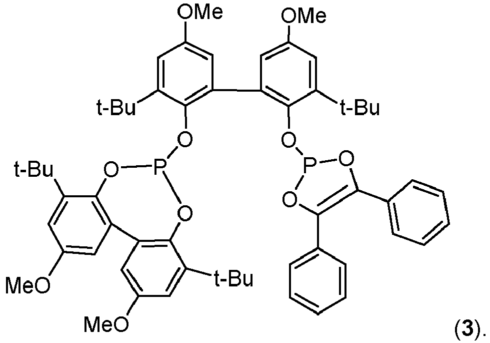

Im Folgenden soll die Erfindung anhand von Ausführungsbeispielen näher erläutert werden.

### Allgemeine Arbeitsvorschriften

Der in Zusammenhang mit dieser Erfindung angegebene Gesamtchlorgehalt wird nach Wickbold bestimmt: Probenvorbereitung nach DIN 51408 und Messung per lonenchromatographie nach DIN EN ISO 10304.

### Synthese von Verbindung (2):

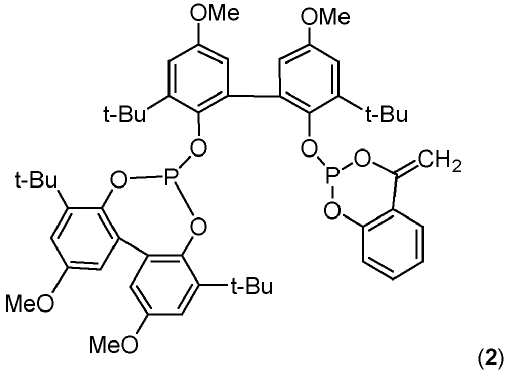

Zu einer Lösung des Dichlorophosphit (1,158 g; 1,369 mmol) in Toluol (15 ml) wird unter Rühren bei Raumtemperatur eine Mischung aus 2-Hydroxyacetophenon (0,187 g; 1,369 mmol) und Triethylamin (1,75 ml) in Toluol (8 ml) getropft. Man rührt über Nacht bei Raumtemperatur und anschließend 6 h bei 7 °C, filtriert und engt das Filtrat im Vakuum ein. Der erhaltene Feststoff wird 3 h bei 50 °C / 0,1 mbar getrocknet und dann säulenchromatografisch (Hexan/Dichlormethan = 1:4; R_{f}= 0,4) gereinigt. Ausbeute: 0,734 g (0,807 mmol; 59%).

### Synthese von Verbindung (3):

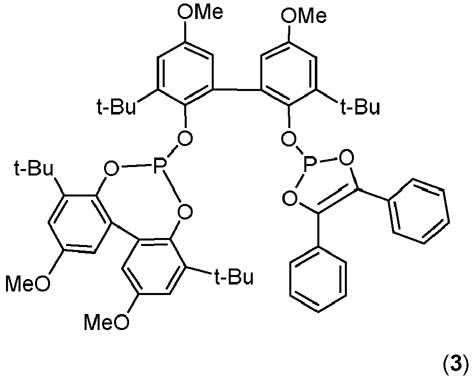

Zu einer Lösung vom Dichlorophosphit 0,629 g; 0,743 mmol) in Toluol (8 ml) wird unter Rühren tropfenweise eine Mischung aus Benzoin (0,158 g; 0,743 mmol) und Triethylamin (0,95 ml) in Toluol (7 ml) gegeben. Man rührt über Nacht bei Raumtemperatur und filtriert. Das Filtrat wird im Vakuum zur Trockne eingeengt und der erhaltene Rückstand 3 h bei 40 °C / 0,1 mbar getrocknet. Die säulenchromatografische Aufreinigung (Dichlormethan, R_{f}= 0,62) ergibt 0,438 g Produkt (0,444 mmol; 60 %).

### Weitere Reduzierung des Chlorgehalts

Aufreinigung von Verbindung (**1**), welche nach der Synthese einen Chlorgehalt von 490 ppm Chlor aufweist.

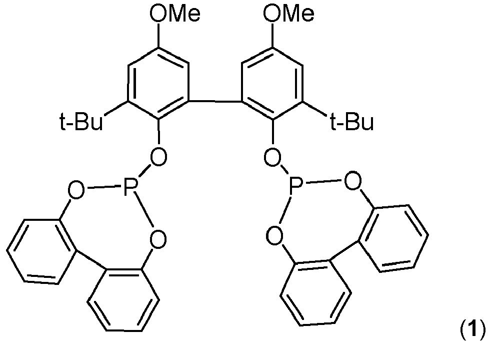

Verbindung (**1**) wurde in getrocknetem Toluol gelöst. Die erhaltene Lösung wurde über eine Schutzgasfritte, die mit Silikagel gefüllt war, unter Argon Atmosphäre filtriert. Das Silikagel wurde vorher in einem Becherglas mittels getrocknetem Toluol aufgeschlemmt und in die Schutzgasfritte überführt. Als Laufmittel wurde getrocknetes Toluol verwendet. Danach wurde das erhaltene Filtrat bis zur Trockene eingeengt.

Die Aufreinigung erfolgt einmal mit einem Verbindung (**1**)-Silikagel-Verhältnis von 1:15 und einmal mit 1:5. Das Verhältnis bezieht sich auf die Masse an Verbindung (**1**), welche gelöst wurde, bzw. auf die Trocken-Masse des in die Schutzgasfritte eingefüllten Silikagels.

Die Verbindungen (**2**) und (**3**) wurden analog, jedoch nur mit einem Verbindung-Silikagel-Verhältnis von 1:5 aufgereinigt.

Die nach Wickbold bestimmten Chlorwerte für die Verbindungen (**1**) bis (**3**) sind in der nachfolgenden Tabelle jeweils in ppm angegeben.

**Tabelle:**

| Verbindung | vor Filtration [ppm] | nach Filtration [ppm] |
|---|---|---|
| (**1**) ^{a)} | 490 | ≤ 20 |
| (**1**) ^{b)} | 490 | ≤ 20 |
| (**2**) ^{b)} | 1300 | 320 |
| (**3**) ^{b)} | 230 | 95 |

| | | |
|---|---|---|
| ^{a)} Verhältnis Verbindung (**1**) : Silikagel = 1:15 ^{b)} Verhältnis Verbindung (**1**) : Silikagel = 1:5 | | |

Wie der Tabelle zu entnehmen ist, konnten die Chlorwerte durch dieses einfache und schnelle Verfahren deutlich gesenkt werden. Somit wurde die Aufgabe durch das erfindungsgemäße Verfahren gelöst.

## Patentansprüche

1. Verfahren zur Reduktion des Chlorgehalts in einem Organobisphosphit einer der allgemeinen Formeln **I** , **II** oder **III**: 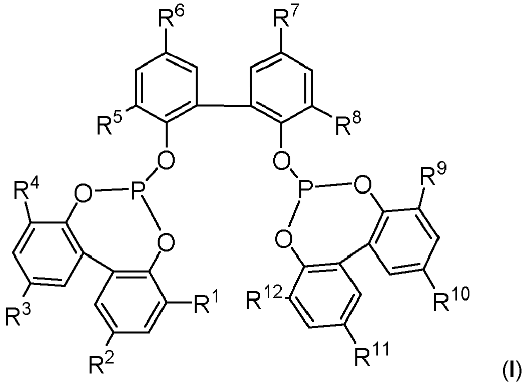 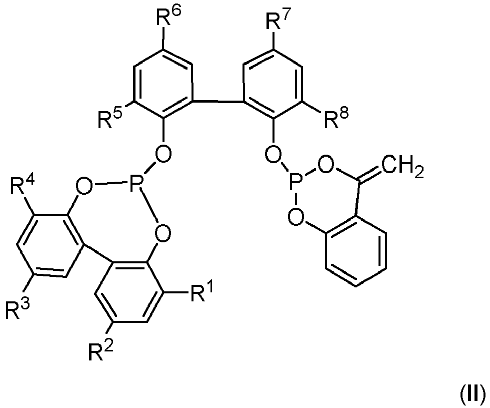 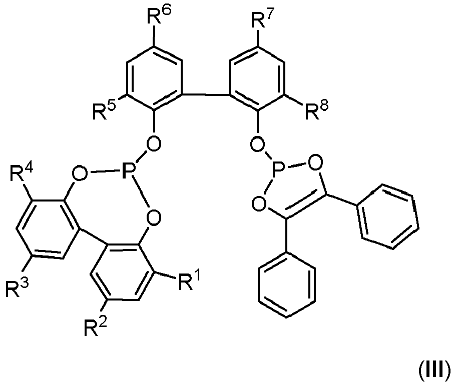 wobei
R¹, R², R³, R⁴, R⁵, R⁶, R⁷, R⁸, R⁹, R¹⁰, R¹¹, R¹² jeweils unabhängig voneinander ausgewählt sind aus: -H, -(C₁-C₁₂)-Alkyl, -O-(C₁-C₁₂)-Alkyl, -O-(C₆-C₂₀)-Aryl, -(C₆-C₂₀)-Aryl, Halogen, -NO₂;
umfassend die Verfahrensschritte:
a) säulenchromatografisch Aufreinigung des Rohproduktes aus der Synthes des Organobisphosphits;
b) auflösen des in a) erhaltenen Organobisphosphits in einem ersten Lösungsmittel oder erstem Lösungsmittelgemisch, so dass eine Lösung vorliegt;
c) filtrieren der Lösung aus b) unter Schutzgas mit einer Schutzgasfritte, welche mit Silikagel gefüllt ist, unter Zugabe eines Laufmittels, wobei auf die jeweilige Masse bezogen mehr Silikagel verwendet wird als Organobisphosphit in Verfahrensschritt b) gelöst wurde.

2. Verfahren nach Anspruch 1,
wobei das Verfahren die zusätzlichen Verfahrensschritte b') und b") umfasst:
b') aufschlemmen von Silikagel mit einem zweiten Lösungsmittel oder zweitem Lösungsmittelgemisch, so dass eine Schlemme vorliegt;
b") einfüllen der Schlemme in eine Schutzgasfritte.

3. Verfahren nach einem der Ansprüche 1 oder 2,
wobei das Silikagel folgende Spezifikation aufweist:
Kieselgel 60, 0,04 - 0,063 mm.

4. Verfahren nach einem der Ansprüche 1 bis 3,
wobei es sich bei dem Schutzgas um Argon handelt.

5. Verfahren nach einem der Ansprüche 1 bis 4,
wobei in Verfahrensschritt b) ein erstes Lösungsmittel verwendet wird.

6. Verfahren nach einem der Ansprüche 1 bis 5,
wobei das erste Lösungsmittel ausgewählt ist aus: Ethylacetat, Anisol, ortho-Xylol, Toluol, Aceton, Methanol, Ethanol, Propanol, iso-Propanol, Acetonitril.

7. Verfahren nach einem der Ansprüche 1 bis 4,
wobei in Verfahrensschritt b) ein erstes Lösungsmittelgemisch verwendet wird.

8. Verfahren nach Anspruch 7,
wobei das erste Lösungsmittelgemisch mindestens zwei Lösungsmittel umfasst ausgewählt aus:
Ethylacetat, Anisol, ortho-Xylol, Toluol, Aceton, Methanol, Ethanol, Propanol, iso-Propanol, Acetonitril.

9. Verfahren nach einem der Ansprüche 2 bis 8,
wobei in Verfahrensschritt b') ein zweites Lösungsmittel verwendet wird.

10. Verfahren nach einem der Ansprüche 2 bis 9,
wobei das zweite Lösungsmittel ausgewählt ist aus: Ethylacetat, Anisol, ortho-Xylol, Toluol, Aceton,
Methanol, Ethanol, Propanol, iso-Propanol, Acetonitril.

11. Verfahren nach einem der Ansprüche 2 bis 8,
wobei in Verfahrensschritt b') ein zweites Lösungsmittelgemisch verwendet wird.

12. Verfahren nach Anspruch 11,
wobei das zweite Lösungsmittelgemisch mindestens zwei Lösungsmittel umfasst ausgewählt aus:
Ethylacetat, Anisol, ortho-Xylol, Toluol, Aceton, Methanol, Ethanol, Propanol, iso-Propanol, Acetonitril.

13. Verfahren nach einem der Ansprüche 1 bis 12,
wobei das Laufmittel ausgewählt ist aus:
Ethylacetat, Anisol, ortho-Xylol, Toluol, Aceton, Methanol, Ethanol, Propanol, iso-Propanol, Acetonitril oder Mischungen daraus.

14. Verfahren nach einem der Ansprüche 1 bis 13,
wobei R¹, R², R³, R⁴, R⁵, R⁶, R⁷, R⁸, R⁹, R¹⁰, R¹¹, R¹² jeweils unabhängig voneinander ausgewählt sind aus: -H, -(C₁-C₁₂)-Alkyl, -O-(C₁-C₁₂)-Alkyl.

15. Verfahren nach einem der Ansprüche 1 bis 13,
wobei das Organobisphosphit die Struktur (1) aufweist:
